# EUROPEAN PATENT SPECIFICATION

(11) **EP 0 794 355 B1**
(45) Date of publication and mention of the grant of the patent: **12.06.2002**
(21) Application number: 97103788.2
(22) Date of filing: 06.03.1997
(51) Int. Cl.: F16H 1/20, F16H 57/02, F16H 37/04

(54) **Multistage angular reducer**
Mehrstufiges Winkeluntersetzungsgetriebe
Boîte de vitesse angulaire avec plusieurs étages de réduction

(30) Priority: 08.03.1996 IT BO960124
(43) Date of publication of application: 10.09.1997
(73) Proprietor: Bonfiglioli Riduttori S.p.A., 40012 Calderara di Reno (IT)
(72) Inventor: Cognigni, Enzo, 40129 Bologna (IT); Depietri, Pietro, 40141 Bologna (IT)
(74) Representative: Jorio, Paolo

(56) References cited:
- EP-A- 0 617 214
- EP-A- 0 632 213
- WO-A-94/10482
- FR-A- 2 400 793
- US-A- 2 869 384
- US-A- 3 214 989
- US-A- 5 058 456

## Description

The present invention relates to a multistage angular reducer.

As is known, reducers of the above type comprise a casing, an input drive shaft, an output driven shaft, and a number of reduction stages housed inside the casing and interposed between the drive and driven shafts.

Such a reducer is described for instance in US-A-3 214 989 (Wellauer et al.).

Indeed, US-A-3 214 989 shows an angular reduced including a drive shaft, a driven shaft and a casing housing a number of reduction stages wherein one of the stages is defined by a bevel pinion and a bevel ring gear. Furthermore, the casing alternately houses two reduction stages or three reduction stages, wherein the mutual positions of the axis of the drive shaft and the axis of the driven shaft are maintained unchanged when switching between two reduction stages and three reduction stages.

However, in US-A-3 214 989 two different casings are provided. The first one is able to receive three stages of reduction and is composed by several parts, whereas the second one is suitable for receiving a two-stage reducer. Thus, in US-A-3 214 989 it is necessary to fit the casing to the user's requirements.

It is an object of the present invention to provide a multistage angular reducer designed to overcome the aforementioned drawbacks.

According to the present invention, there is provided a multistage angular reducer of the type according to claim 1.

Moreover, the stage comprising the bevel pinion is never located at the start of the gear train.

A number of preferred, non-limiting embodiments of the present invention will be described by way of example with reference to the accompanying drawings, in which (elements performing the same or similar functions are indicated using the same numbering system):
Figure 1 shows a preferred embodiment of a two-stage angular reducer in accordance with the present invention;
Figure 2 shows a cross section of the preferred embodiment in Figure 1;
Figure 3 shows a preferred embodiment of a three-stage angular reducer in accordance with the present invention and featuring the same casing as the Figure 1 and 2 reducer;
Figure 4 shows a section of the casing of the reducer in Figures 1 to 3;
Figure 5 shows a first section of the Figure 4 casing;
Figure 6 shows a side view of the casing in the above drawings;
Figure 7 shows a second section of the Figure 4 casing;
Figure 8 shows a third section of the Figure 4 casing.

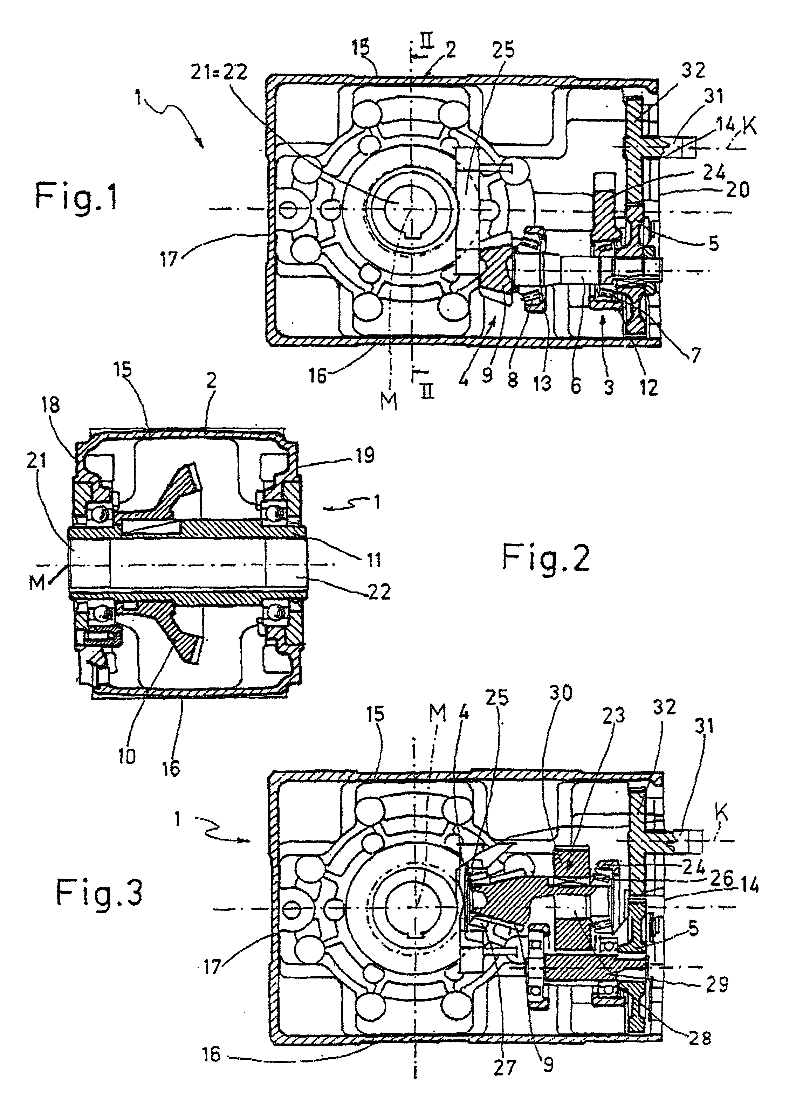

In the Figure 1 and 2 embodiment, the angular reducer 1 comprises two reduction stages 3, 4 housed inside a casing 2. The first stage 3 comprises a first cylindrical gear 32 (of axis K) integral with a drive shaft 31, and which meshes with a second cylindrical gear 5 fitted to a shaft 6 supported by two bearings 7, 8.

The second stage 4 in the Figure 1 and 2 embodiment comprises a hypoid bevel pinion 9 meshing with a bevel ring gear 10 integral with a driven shaft 11 (of axis M) (Figure 2).

As shown in Figures 1 and 2, hypoid pinion 9 is supported by the same shaft 6 to which second cylindrical gear 5 is fitted, and which, as stated, is in turn supported by bearings 7, 8, which are supported by inner supports 12, 13.

Casing 2 comprises a number of walls 14-19 defining a box structure; wall 14 comprises an opening 20 through which motion is transmitted from first cylindrical gear 32 to second cylindrical gear 5; and seats 21, 22 (Figure 2) are formed respectively in walls 18, 19 to support driven shaft 11 by means of bearings and therefore also support bevel ring gear 10 integral with driven shaft 11.

In the Figure 1 and 2 embodiment featuring two stages 3, 4, shaft 6 to which second cylindrical gear 5 is fitted also supports hypoid pinion 9, which, as stated, meshes with bevel ring gear 10 to transmit motion from shaft 6 to driven shaft 11. As shown in Figure 1, inner supports 12, 13, and therefore also respective bearings 7, 8, are located in the gap between second cylindrical gear 5 and hypoid bevel pinion 9.

In the two-stage reducer, motion "enters" casing 2 via first reduction stage 3 defined by first cylindrical gear 32 meshing with second cylindrical gear 5, "passes" through second reduction stage 4 defined by hypoid pinion 9 meshing with bevel ring gear 10, and "leaves" from driven shaft 11 which drives a user element (not shown).

To switch to a three-stage reducer 1 using the same casing 2 and maintaining the the same distance between axes K and M, a third stage 23 must be added. That is, a second pair of inner supports 24, 25 supporting a countershaft 28 by means of respective bearings 26, 27 must be provided. In the three-stage embodiment shown in Figure 3, shaft 6 of the Figure 2 two-stage reducer is replaced by a toothed shaft 29 meshing with a third cylindrical gear 30 fitted to countershaft 28, which also supports bevel pinion 9. Third cylindrical gear 30 and bevel pinion 9 are housed inside the gap defined by inner supports 24 and 25, which, for the elements of the three-stage gear train to mesh properly, are offset with respect to inner supports 12 and 13.

The four inner supports 12, 13, 24, 25 are formed in one piece with casing 2.

Inner supports 24, 25 are also obviously provided in the Figure 1 embodiment featuring only two reduction stages 3, 4, in which case, only inner supports 12 and 13 are used for supporting the transmission elements.

Third reduction stage 23 is located between first stage 3 and second stage 4, which is "shifted" so to speak to permit insertion of third stage 23. Though specific reference is made in the Figure 3 embodiment to a toothed shaft 29, this may obviously be replaced by any equivalent transmission member (e.g. a cylindrical gear integral with a shaft resting on inner supports 12, 13).

As shown in the accompanying drawings, the axis of inner supports 24, 25 is coplanar and perpendicular to axis M of seats 21, 22, so as to define a plane not containing axis K of drive shaft 31.

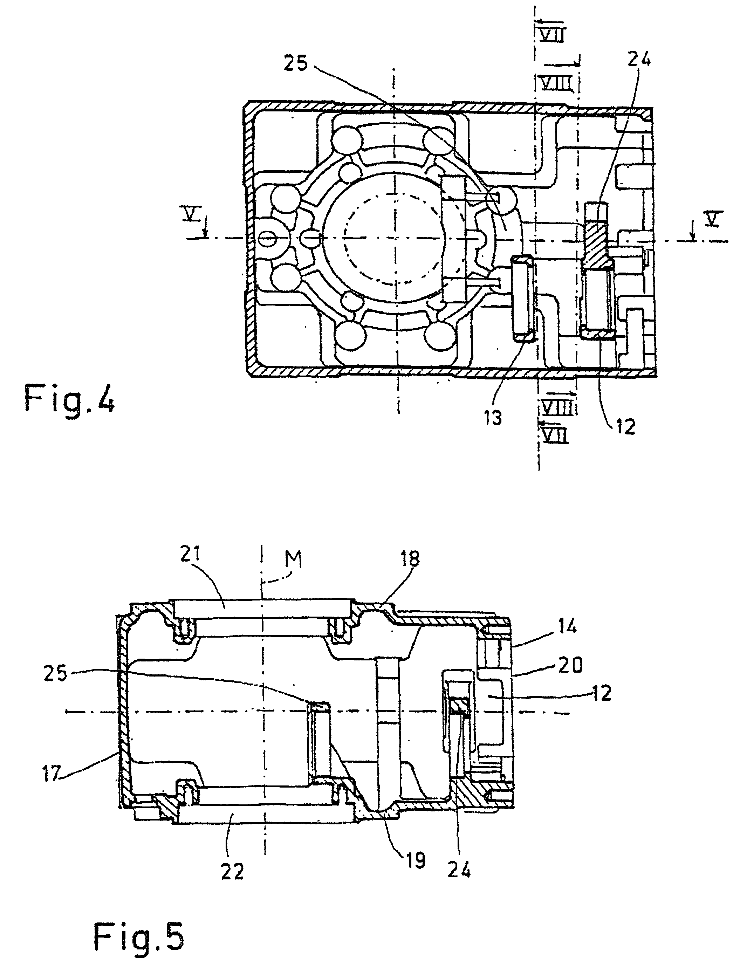

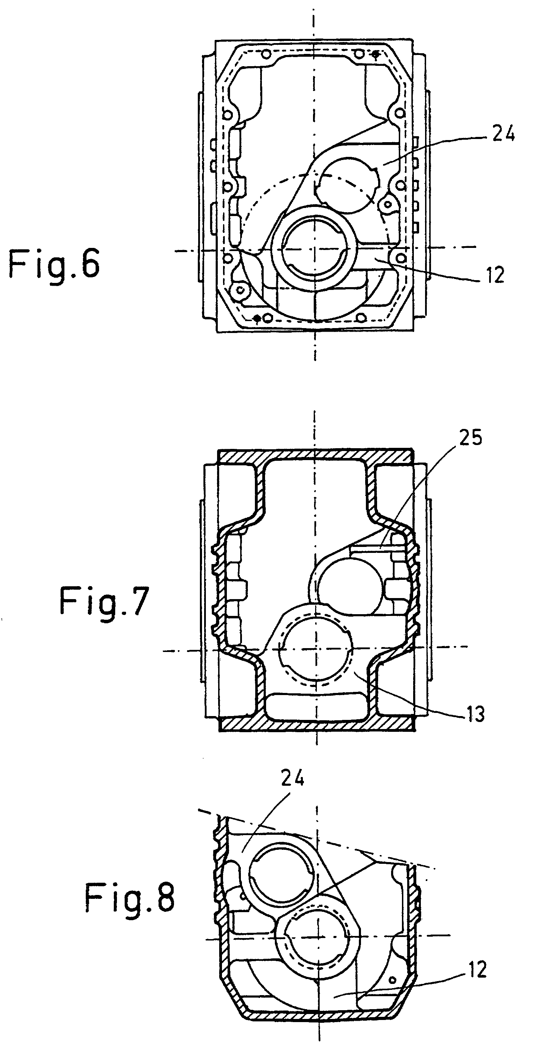

Figures 4-8 show more clearly the mutual positions of inner supports 12, 13, 24, 25, also with respect to walls 14-19 defining casing 2.

The reducer described therefore provides for considerable saving in terms of production and storage cost, by enabling the same casing to be used for two or three stages, as required by the user. Moreover, substitution of the gear train is a highly straightforward job not requiring the use of particularly skilled labour.

Clearly, changes may be made to the angular reducer as described and illustrated herein.

## Claims

1. A multistage speed reducer (1) comprising:
a casing (2) having a first pair of inner supports (12, 13) formed integrally in one piece with said casing (2) and a second pair (24, 25) of inner supports formed integrally in one piece with said casing (2);
a drive shaft (31) rotatable about a first axis (K);
a driven shaft (11) rotatable about a second axis (M); and
a plurality of reduction stages (3, 4, 23) housed inside of said casing (2) between said drive shaft (31) and said driven shaft (11), one of said reduction stages including one bevel ring gear (10);
said multistage speed reducer (1) being selectively reconfigurable between a two reduction stages configuration (3, 4) and a three reduction stages configuration (3, 4, 23), with the mutual positions of the first axis (K) of the drive shaft (31) and the second axis (M) of the driven shaft (11) remaining unchanged in each of said reduction stages configurations (3, 4, 23);
**characterized in that** said bevel ring gear (10) is mounted on said driven shaft (11), when said multistage speed reducer (1) is configured in said two reduction stages configuration (3, 4), a first pinion shaft (6) which supports a first pinion (9) meshing with said bevel ring gear (10) is supported by said first pair of inner supports (12, 13) and when said multistage speed reducer (1) is configured in said three reduction stages configuration (3, 4, 23), a second pinion shaft (28) which supports a second pinion (9) meshing with said bevel ring gear (10) is supported by said second pair of inner supports (24, 25).

2. An angular reducer (1) as claimed in Claim 1, wherein at least one stage (4) comprises a pair of gears defined by a bevel pinion (9) and a bevel ring gear (10).

3. An angular reducer (1) as claimed in Claim 2, wherein, when said casing (2) houses two reduction stages (3, 4), said bevel pinion (9) is a hypoid bevel pinion.

4. An angular reducer (1) as claimed in Claim 3, wherein said first inner supports (12, 13) are located inside the gap between a first cylindrical gear (5) and said hypoid bevel pinion (9).

5. An angular reducer (1) as claimed in Claim 2, wherein, when said casing (2) houses three reduction stages (3, 4, 23), the third reduction stage (23) is located between said first reduction stage (3) and said second reduction stage (4).

6. An angular reducer (1) as claimed in Claim 5, wherein said first inner supports (12, 13) support a toothed transmission element (29) with which said first cylindrical gear (5) is integral, and said second inner supports (24, 25) support a countershaft (28) to which are fitted a second cylindrical gear (30) and said bevel pinion (9).

7. An angular reducer (1) as claimed in Claim 6, wherein said second inner supports (24, 25) are offset with respect to said first inner supports (12, 13).

8. An angular reducer (1) as claimed in Claim 6, wherein said toothed transmission element (29) is a toothed shaft.

9. An angular reducer (1) as claimed in Claim 6, wherein said second cylindrical gear (30) and said bevel pinion (9) are located in the gap between said second inner supports (24, 25).

## Patentansprüche

1. Mehrstufiges Winkeluntersetzungsgetriebe (1) mit:
einem Gehäuse (2), das ein erstes Paar von Innengestellen (12, 13), die einstückig mit dem Gehäuse (2) ausgebildet sind, und ein zweites Paar von Innengestellen (24, 25), die einstückig mit dem Gehäuse (2) ausgebildet sind, aufweist;
einer Antriebswelle (31), die um eine erste Achse (K) drehbar ist;
einer Abtriebswelle (11), die um eine zweite Achse (M) drehbar ist; und
einer Mehrzahl von Untersetzungsstufen (3, 4, 23), die in dem Gehäuse (2) zwischen der Antriebswelle (31) und der Abtriebswelle (11) untergebracht sind, wobei eine der Untersetzungsstufen einen Kegelzahnkranz (10) aufweist;
und wobei das mehrstufige Winkeluntersetzungsgetriebe (1) wahlweise zwischen einer Gestaltung mit zwei Untersetzungsstufen (3, 4) und einer Gestaltung mit drei Untersetzungsstufen (3, 4, 23) umgestaltet werden kann, wobei die wechselseitigen Positionen der ersten Achse (K) der Antriebswelle (31) und der zweiten Achse (M) der Abtriebswelle (11) bei jeder Gestaltung der Untersetzungsstufen (3, 4, 23) unverändert bleiben,
**dadurch gekennzeichnet, dass**
der Kegelzahnkranz (10) an der Abtriebswelle (11) angebracht ist, eine erste Ritzelwelle (6), die ein erstes Kegelrad (9) trägt, das mit dem Kegelzahnkranz (10) ineinandergreift, von dem ersten Paar von Innengestellen (12, 13) abgestützt wird, wenn das mehrstufige Winkeluntersetzungsgetriebe (1) in der Gestaltung mit zwei Untersetzungsstufen (3, 4) gestaltet ist, und wenn das mehrstufige Winkeluntersetzungsgetriebe (1) in der Gestaltung mit drei Untersetzungsstufen (3, 4, 23) gestaltet ist, eine zweite Ritzelwelle (28), die ein zweites Kegelrad (9) trägt, das mit dem Kegelzahnkranz (10) ineinandergreift, von dem zweiten Paar von Innengestellen (24, 25) abgestützt wird.

2. Winkeluntersetzungsgetriebe (1) nach Anspruch 1, **dadurch gekennzeichnet, dass** wenigstens eine Stufe (4) ein Getriebepaar aufweist, das durch ein Kegelrad (9) und einen Kegelzahnkranz (10) definiert ist.

3. Winkeluntersetzungsgetriebe (1) nach Anspruch 2, **dadurch gekennzeichnet, dass** das Kegelrad (9) ein Hypoidkegelrad ist, wenn in dem Gehäuse zwei Untersetzungsstufen (3, 4) untergebracht sind.

4. Winkeluntersetzungsgetriebe (1) nach Anspruch 3, **dadurch gekennzeichnet, dass** die ersten Innengestellt (12, 13) in dem Raum zwischen einem ersten Stirnrad (5) und dem Hypoidkegelrad (9) angeordnet sind.

5. Winkeluntersetzungsgetriebe (1) nach Anspruch 2, **dadurch gekennzeichnet, dass**, wenn in dem Gehäuse (2) drei Untersetzungsstufen (3, 4, 23) untergebracht sind, die dritte Untersetzungsstufe (23) zwischen der ersten Untersetzungsstufe (3) und der zweiten Untersetzungsstufe (4) angeordnet ist.

6. Winkeluntersetzungsgetriebe (1) nach Anspruch 5, **dadurch gekennzeichnet, dass** die ersten Innengestelle (12, 13) ein gezahntes Übertragungselement (29) abstützen, das einstückig mit dem ersten Stirnrad (5) ausgebildet ist, und dass die zweiten Innengestelle (24, 25) eine Vorlegewelle (28) abstützen, an der ein zweites Stirnrad (30) und das Kegelrad (9) angebracht sind.

7. Winkeluntersetzungsgetriebe (1) nach Anspruch 6, **dadurch gekennzeichnet, dass** die zweiten Innengestelle (24, 25) mit Bezug auf die ersten Innengestelle (12, 13) versetzt sind.

8. Winkeluntersetzungsgetriebe (1) nach Anspruch 6, **dadurch gekennzeichnet, dass** das gezahnte Übertragungselement (29) eine gezahnte Welle ist.

9. Winkeluntersetzungsgetriebe (1) nach Anspruch 6, **dadurch gekennzeichnet, dass** das zweite Stirnrad (30) und das Kegelrad (9) in dem Raum zwischen den zweiten Innengestellen (24, 25) angeordnet sind.

## Revendications

1. Réducteur de vitesse à plusieurs étages (1) comprenant :
un boîtier (2) présentant une première paire de supports internes (12, 13) réalisés intégralement en une pièce avec ledit boîtier (2) et une deuxième paire (24, 25) de supports internes réalisés intégralement en une pièce avec ledit boîtier (2);
un arbre menant (31) apte à tourner autour d'un premier axe (K);
un arbre mené (11) apte à tourner autour d'un second axe (M); et
plusieurs étages de réduction (3, 4, 23) renfermés à l'intérieur dudit boîtier (2) entre ledit arbre menant (31) et ledit arbre mené (11), l'un desdits étages de réduction comprenant une couronne dentée conique (10); ledit réducteur de vitesse à plusieurs étages (1) pouvant être reconfiguré sélectivement entre une configuration à deux étages de réduction (3, 4) et une configuration à trois étages de réduction (3, 4, 23), les positions mutuelles du premier axe (K) de l'arbre menant (31) et du second axe (M) de l'arbre mené (11) restant inchangées dans chacune desdites configurations d'étages de réduction (3, 4, 23);
**caractérisé en ce que** ladite couronne dentée conique (10) est montée sur ledit arbre mené (11) lorsque ledit réducteur de vitesse à plusieurs étages (1) est configuré selon ladite configuration à deux étages de réduction (3, 4), un premier arbre de pignon (6) qui supporte un premier pignon (9) engrenant avec ladite couronne dentée conique (10) est supporté par ladite première paire de supports internes (12, 13), et lorsque ledit réducteur de vitesse à plusieurs étages (1) est configuré selon ladite configuration à trois étages de réduction (3, 4, 23), un deuxième arbre de pignon (28) qui supporte un deuxième pignon (9) engrenant avec ladite couronne dentée conique (10) est supporté par ladite seconde paire de supports internes (24, 25).

2. Réducteur angulaire (1) selon la revendication 1, où au moins un étage (4) comprend une paire de roues dentées définie par un pignon conique (9) et une couronne dentée conique (10).

3. Réducteur angulaire (1) selon la revendication 2, où, lorsque ledit boîtier (2) renferme-deux étages de réduction (3, 4), ledit pignon conique (9) est un pignon conique hypoide.

4. Réducteur angulaire (1) selon la revendication 3, où lesdits premiers supports internes (12, 13) se situent à l'intérieur de l'espace entre une première roue dentée cylindrique (5) et ledit pignon conique hypoïde (9).

5. Réducteur angulaire (1) selon la revendication 2, où, lorsque ledit boîtier (2) renferme trois étages de réduction (3, 4, 23), le troisième étage de réduction (23) se situe entre ledit premier étage de réduction (3) et ledit deuxième étage de réduction (4).

6. Réducteur angulaire (1) selon la revendication 5, où lesdits premiere supports internes (12, 13) supportent un élément de transmission denté (29) avec lequel ladite première roue dentée cylindrique (5) est intégrale, et lesdits seconds supports internes (24, 25) supportent un arbre intermédiaire (28) sur lequel sont montés une deuxième roue dentée cylindrique (30) et ledit pignon conique (9).

7. Réducteur angulaire (1) selon la revendication 6, où lesdits seconds supports internes (24, 25) sont décalés par rapport auxdits premiers supports internes (12, 13).

8. Réducteur angulaire (1) selon la revendication 6, où ledit élément de transmission denté (29) est un arbre denté.

9. Réducteur angulaire (1) selon la revendication 6, où ladite seconde roue dentée cylindrique (30) et ledit pignon conique (9) se situent dans l'espace entre lesdits seconds supports internes (24, 25).
